# EUROPEAN PATENT APPLICATION

(11) **EP 1 693 813 A2**
(43) Date of publication of application: **23.08.2006**
(21) Application number: 06002178.9
(22) Date of filing: 02.02.2006
(51) Int. Cl.: G08G 1/005, G08G 1/123, G08G 1/0968, G07F 19/00

(54) **System and method for providing public tranport information**

(30) Priority: 22.02.2005 KR 2005014726
(71) Applicant: Samsung Electronics Co., Ltd., Suwon-si, Gyeonggi-Do (KR)
(72) Inventor: Jung, Jae-Young, Yeongtong-gu Suwon-si Gyeonggi-do (KR)
(74) Representative: Grünecker, Kinkeldey, Stockmair & Schwanhäusser Anwaltssozietät

(57) **Abstract**

A system and method for providing public transport information is disclosed, which implements a function capable of providing optimal public transport information to a user who uses public transport when traveling. To this end, when a user brings a mobile communication terminal having a transport card function, i.e., a mobile pay phone, into contact with a billing terminal installed in a bus or a subway station, optimal public transport information for transfer including public transport information and current station information with respect to the user, is provided to the user through the mobile pay phone. In this manner, the user can receive various routing information such as shortest time information, lowest fare information and shortest distance information of public transport modes that are available on the way to a destination. As such, the difficulty in using complex public transport transfer services can be alleviated by providing a user with information about an optimal public transport mode that can be conveniently used when the user follows a route to a destination, thereby maximizing convenience in the use of public transport services.

## Description

The present invention generally relates to a system and method for providing public transport information, and in particular, to a system and method for providing public transport information in which a user is provided with public transport information that can optimally reach a destination using a terminal having a transport card function.

Generally, navigation systems include a Personal Navigation System (PNS) that can be carried by individuals and a Car Navigation System (CNS) that is mounted on vehicles to provide various driving information. Among those navigation systems, the CNS provides information required for driving to a driver of a vehicle in real time, such as by displaying a direction the vehicle moves, a distance from a current position of the vehicle to a driver's destination, a current driving speed of the vehicle and an optimal route to the driver's destination. However, since the CNS is mounted on the vehicle, its use is accompanied by space restrictions.

On the other hand, since the PNS can receive a variety of information while being carried by individuals, it can be used in various ways. A terminal having a navigation function (hereinafter, referred to as a navigation terminal) has a communication function to communicate with a navigation server and operates similar to a mobile communication terminal such as a cellular phone or a Personal Digital Assistant (PDA). Thus, once a user inputs a departure position and a destination to a conventional navigation terminal, the conventional navigation terminal sets an optimal route from the departure position to the destination and displays the set optimal route while displaying a corresponding road map. However, when the user carrying the conventional navigation terminal needs to transfer on the way to the destination, the user has difficulty determining which public transport mode is optimal. As a result, the time required to get to the destination may increase. Moreover, a public transport fare may vary with public transport modes. Thus, the user cannot know which public transport mode is the most cost-efficient.

Therefore, in an operation system and method for servicing transport information in real time, allowing users to accurately and easily transmit a request for desired transport information to the operation system regardless of where they are located and to accurately and easily acquire the desired transport information is important to maximize the usability of public transport services and convenience in the use of the public transport services.

As described above, conventionally, when a user carrying a PNS terminal desires to get to a destination, the user is only provided with vehicle-based route information, but cannot be provided with public transport transfer information. As a result, when the user needs to transfer on the way to the destination, the user has difficulty determining which public transport mode is optimal.

It is, therefore, the object of the present invention to provide a system and method for providing public transport information, in which when a user moves to a destination using public transport, convenience in the use of public transport services is maximized by providing the user with information about an optimal public transport mode that can be conveniently used for the user to transfer.

This object is solved by the subject matter of the independent claims.

Preferred embodiments are defined in the dependent claims.

To achieve the above, there is provided a system for providing public transport information. The system includes a public transport information server, a billing terminal, a billing server and a mobile communication terminal. The public transport information server provides initial public transport transfer information required on the way to a destination at a request for a public transport information service from a user and provides optimal public transport information based on current traffic condition information and transfer position information when the user transfers. The billing terminal bills a public transport fare and transmits user boarding/alighting information when the user boards or alights. The billing server provides the transfer position information to the public transport information server using the user boarding/alighting information transmitted from the billing terminal. The mobile communication terminal contacts the billing terminal to pay for the public transport fare and outputs the optimal public transport information provided from the public transport information server whenever the user transfers.

To achieve the above, there is also provided a method for providing public transport information. The method includes the steps of using a public transport information server to provide initial public transport transfer information required on the way to a destination at a request for a public transport information service from a mobile communication terminal, the mobile communication terminal determining whether a boarding/alighting event occurs in a public transport mode corresponding to the initial public transport transfer information, transmitting a request for public transport transfer information that is optimal in a user's current position to the public transport information server if the boarding/alighting event occurs and receiving and outputting the optimal public transport transfer information.

The present invention will become more apparent from the following detailed description when taken in conjunction with the accompanying drawings in which:
FIG. 1 is a block diagram of a system for providing public transport information according to an embodiment of the present invention;
FIG. 2 is a schematic block diagram of a public transport information server according to an embodiment of the present invention;
FIG. 3 illustrates management data of components of the public transport information server according to an embodiment of the present invention;
FIG. 4 is a schematic block diagram of a mobile pay phone to be provided with optimal public transport route information according to an embodiment of the present invention;
FIG. 5 is a block diagram of a Radio Frequency Identification (RFID) tag of FIG. 4;
FIG. 6 is a schematic block diagram of a billing terminal according to an embodiment of the present invention;
FIG. 7 illustrates signal flows between components of a system for providing public transport information according to an embodiment of the present invention;
FIG. 8 illustrates a screen which displays initial public transport information according to an embodiment of the present invention; and
FIGs. 9A and 9B illustrate public transport information including transfer information according to an embodiment of the present invention.

Preferred embodiments of the present invention will now be described in detail with reference to the annexed drawings. In the following description, a detailed description of known functions and configurations incorporated herein has been omitted for conciseness.

The present invention implements a function capable of providing optimal public transport information to a user who uses public transport when the user transfers. When a user brings a mobile communication terminal having a transport card function, i.e., a mobile pay phone, into contact with a billing terminal installed in a bus or a subway station, optimal public transport information for transfer, including public transport route information and current station information with respect to the user, is provided to the user through the mobile pay phone. In this manner, the user can receive various routing information such as shortest time information, lowest fare information and shortest distance information of public transport modes that are available en route to a destination. As such, according to the present invention, diffculty in using complex public transport transfer services can be alleviated by providing a user with information about an optimal public transport mode that can be conveniently used when the user transfers en route to a destination, thereby maximizing convenience in the use of public transport services.

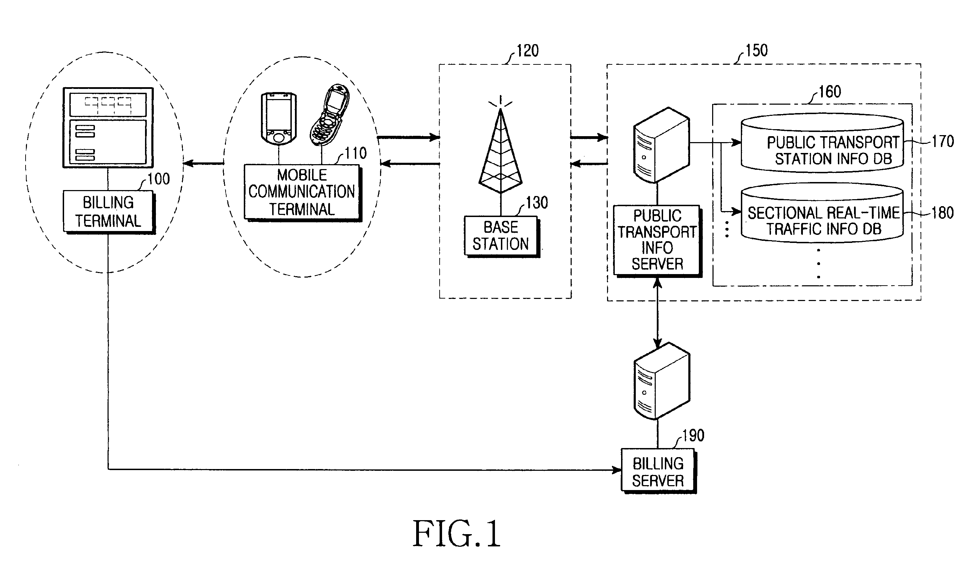

FIG. 1 is a block diagram of the system for providing public transport information according to an embodiment of the present invention.

Referring to FIG. 1, the system includes a billing terminal 100, a mobile communication terminal (mobile pay phone) 110, a mobile communication network 120 and a public transport information server 150.

First, the billing terminal 100 for billing a public transport fare operates with a billing server 190 in real time. More specifically, when the user brings the mobile communication terminal 110 into contact with the billing terminal 100, a public transport fare is billed and information about the use of public transport is transmitted to the billing server 190. In addition, the billing terminal 100 bills a public transport fare and concurrently transmits user boarding/alighting information to the billing server 190.

The mobile communication terminal 110 is a terminal carried by a user, such as a PDA or a cellular phone, has a transport card function according to the present invention and is used as a payment means for paying a public transport fare. Hereinafter, the mobile communication terminal 110 having the transport card function will be referred to as a mobile pay phone. In particular, the mobile pay phone 110 allows the user to connect to the public transport information server 150 using a Short Message Service (SMS) or a data service. Thus, the user sets a departure position, a destination and a desired transport mode type and transmits them to the public transport information server 150 using the SMS or the data service.

The public transport information server 150 then transmits information corresponding to a request for a public transport route information service from the user to the mobile pay phone 110. In other words, the mobile pay phone 110 is provided from the public transport information server 150 with not only public transport information required for the user to reach the destination but also information about an optimal public transport mode to which the user can transfer.

More specifically, when the user requests the public transport route information service, the public transport information server 150 provides public transport transfer information required for the user to transfer on the way to the destination. When the user uses a public transport mode depending on the public transport transfer information, the public transport information server 150 provides optimal public transport information based on current traffic condition information and transfer position information to the mobile pay phone 110. Thus, the mobile pay phone 110 displays the optimal public transport information in written form on a screen or outputs the same in voice form through a speaker

The mobile communication network 120 includes a component that performs common radio relaying, such as a base station 130. The mobile communication network 120 relays data between the mobile pay phone 110 and the public transport information server 150 through radio communication according to the present invention.

The public transport information server 150 includes a database 160 that is connected to the mobile communication network 120 to manage a user's boarding/alighting position on the way to the destination, the time required for each section between stations, transfer information and traffic condition information. For example, the database 160 may include a public transport station information database (DB) 170 and a sectional real-time traffic information database (DB) 180 and stores information to provide optimal public transport information to the user.

The billing server 190 is connected to the public transport information server 150 and the billing terminal 100 to manage a boarding/alighting position of a user who requests the public transport route information service, a distance the user boards, and recording of a user's transfer and bills a public transport fare to the user based on such information. In particular, the billing server 190 according to the present invention operates with the public transport information server 150, thereby easily recognizing a current position of the mobile pay phone 110. In other words, the billing server 190 can provide the transfer position information to the public transport information server 150 using the user boarding/alighting information transmitted from the billing terminal 100.

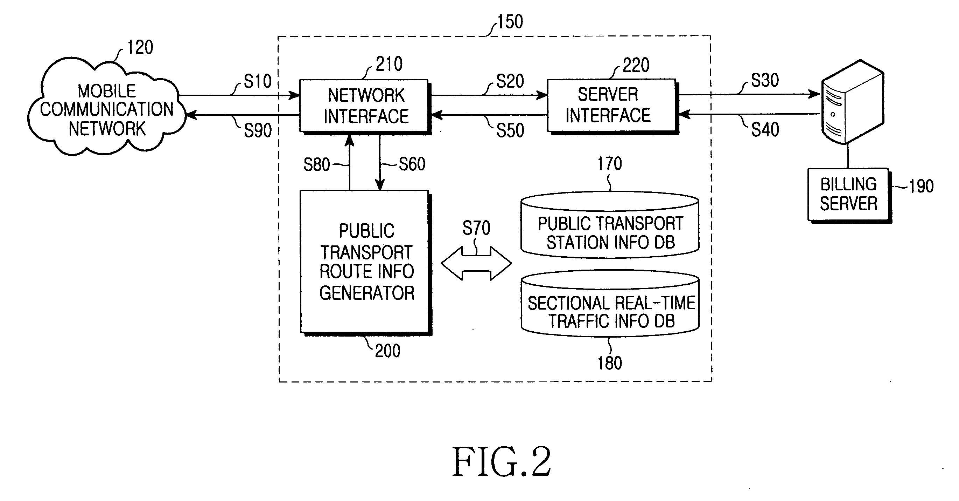

FIG. 2 is a schematic block diagram of the public transport information server 150 according to an embodiment of the present invention. Referring to FIG. 2, the public transport information server 150 is connected to the mobile communication network 120 and the billing server 190. The public transport information server 150 includes an interface-to-mobile communication network 210 (hereinafter, referred to as a network interface), an interface-to- billing server 220 (hereinafter, referred to as a server interface), the public transport station information DB 170, the sectional real-time traffic information DB 180, and a public transport route information generator 200.

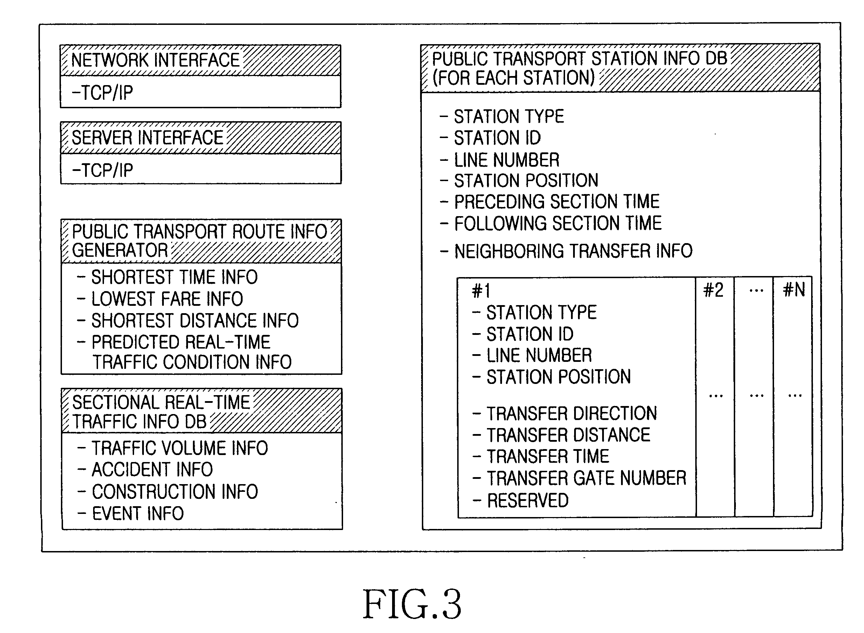

The components of the public transport information server 150 manage data as shown in FIG. 3. For example, the network interface 210 manages data through Transmission Control Protocol (TCP)/Internet Protocol (IP) which allows communication with the mobile communication network 120. The server interface 220 manages data through TCP/IP which allows communication with the billing server 190.

The public transport station information DB 170 stores information such as a station type, a station ID, a line number, a station position, a preceding section time, a following section time and neighboring transfer information for each station. The sectional real-time traffic information DB 180 stores various traffic condition information that may affect traffic conditions such as current traffic volume information, accident information, construction information and event information, so as to provide optimal public transport information to the user based on traffic conditions that change in real time. More specifically, the public transport station information DB 170 and the sectional real-time traffic information DB 180 classify public transport modes that are available for the user, receive line numbers corresponding to lines passing through each station of each public transport mode, provide information about stations through which each line corresponding to each line number passes, station names, expected time required to move from a station to another and the intervals of each line of each public transport mode. The public transport station information DB 170 and the sectional real-time traffic information DB 180 further provide various transfer information required for the user to transfer en route to the destination from the public transport route information generator 200, stores the information, and outputs corresponding information at an information search request from the user.

The public transport route information generator 200 provides optimal public transport route information to the user through a routing algorithm such as shortest time information, lowest fare information, shortest distance information and predicted real-time traffic condition information using a current position of the mobile pay phone 110 and the destination that is initially input by the user.

To generate optimal public transport route information, components of the public transport information server 150 operate as follows.

First, a request for a public transport route information service from the user is transmitted to the network interface 210 through the mobile communication network 120. The request includes information about a departure position, a destination and a desired transport mode type. The public transport route information generator 200 generates optimal public transport route information with reference to the public transport station information DB 170 and the sectional real-time traffic information DB 180 at the request from the network interface 210 and transmits the generated optimal public transport route information to the mobile pay phone 110.

The user then uses public transport by referring to the optimal public transport route information provided from the public transport information server 150 until the user reaches the destination. Once the user boards a corresponding transport mode and brings the mobile pay phone 110 into contact with the billing terminal 100, the mobile pay phone 110 indicates the occurrence of a boarding/alighting event using the SMS or the data service.

The occurrence of the boarding/alighting event is transmitted to the network interface 210 of the public transport information server 150 through the mobile communication network 120 in step S10. The public transport information server 150 then requests a current position of the mobile pay phone 110, e.g., station information, to the billing server 190 based on user information of the pay phone 110, i.e., a subscriber number. Once such a request is transmitted to the server interface 220 in step S20, the server interface 220 transmits a request for information related to the current position of the mobile pay phone 110 to the billing server 190 through TCP/IP. In response to the request, the billing server 190 refers to station use information and recording of a user's transfer with respect to the mobile pay phone 110 and transmits the latest input station position of the mobile pay phone 110 to the server interface 220 in step S40. The interface 200 then provides information transmitted from the billing server 190 to the public transport route information generator 200 through the network interface 210 in step S50.

In step S70, the public transport route information generator 200 calculates a current optimal public transport route based on the current position of the mobile pay phone 100, the destination that is initially input by the user, the requested route information service and information stored in the public transport station information DB 170 and the sectional real-time traffic information DB 180. The calculated current optimal public transport route is transmitted to the network interface 210 in step S80 and then to the mobile pay phone 110 through the mobile communication network 120 in step S90.

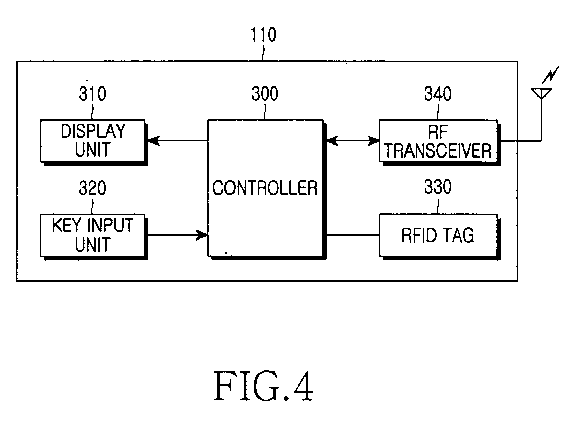

FIG. 4 is a schematic block diagram of the mobile pay phone 110 to provide with optimal public transport route information according to an embodiment of the present invention.

Referring to FIG. 4, the mobile pay phone 110 includes a controller 300, a display unit 310, a key input unit 320, a Radio Frequency (RF) transceiver 340, and an RFID tag 330.

The controller 300 controls an overall operation of the mobile pay phone 110. In particular, the controller 300 transmits its unique tag ID to the billing terminal 100 through the RFID tag 330 when the user brings the mobile pay phone 110 into contact with the billing terminal 100. A tag ID indicates a unique value assigned to each mobile pay phone and may include an ID of a transport card chip. Thus, the billing terminal 100 can identify the mobile pay phone 110 based on the tag ID. In addition, the controller 300 controls components of the mobile pay phone 110 to inform the user of the public transport route information provided from the public transport information server 150 in the form of voice or a display.

Under the control of the controller 300, the display unit 310 receives display data corresponding to key input data from the key input unit 320 and displays the display data or visually informs the user of an operation state when the user sets or operates a required function. In particular, optimal public transport route information provided from the public transport information server 150 is displayed on the display unit 310 under the control of the controller 300. The key input unit 320 outputs an input signal corresponding to a user input to the controller 300. The key input unit 320 may be a keypad and outputs a request for a public transport route information service input from the user to the controller 300. The key input unit 320 is used to input information when the user initially requests the public transport information service. Through the key input unit 320, the user can input a departure position, a destination and a desired transport mode type.

The RF transceiver 340 allows the mobile pay phone 110 to communicate with the public transport information server 150 and transmits or receives the request for the public transport information service or results corresponding to the request.

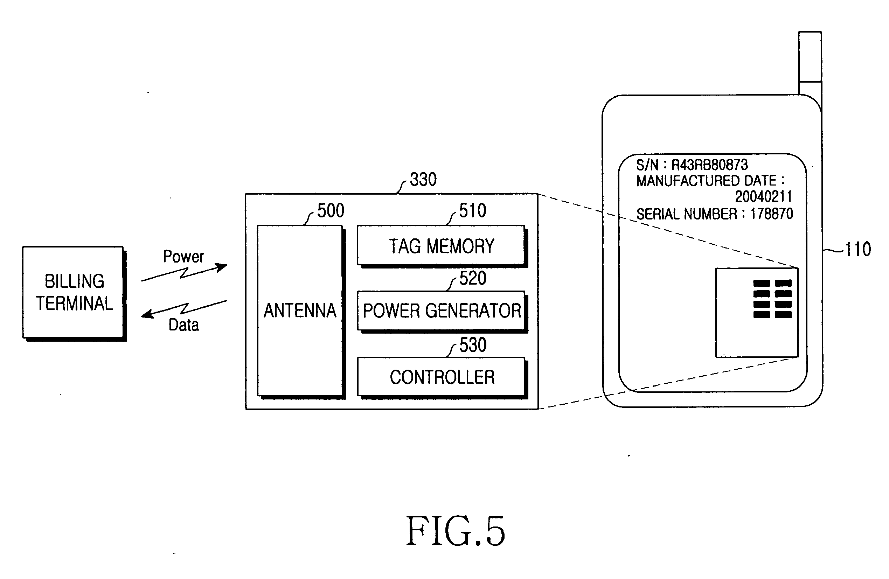

The RFID tag 330 stores a unique tag ID assigned to each mobile pay phone. Once the user brings the mobile pay phone 110 into contact with the billing terminal 100, the RFID tag 330 senses an effective frequency and transmits information stored therein to an RFID reader 610 of the billing terminal 100. A detailed configuration of the RFID tag 330 is shown in FIG. 5.

As shown in FIG. 5, the RFID tag 330 is an integrated circuit (IC) chip manufactured for various purposes and includes a tag memory 510 for storing user related information including the tag ID, a one-chip antenna coil 500 capable of sensing whether there is an effective frequency within a particular distance and receiving a frequency transmitted from an antenna of the RFID reader 610 of the billing terminal 100, a power generator 520 for supplying power to the components of the RFID tag 330 and a control circuit 530 for controlling transmission of the user related information stored in the tag memory 510 through the one-chip antenna coil antenna 500 if the effective frequency is sensed.

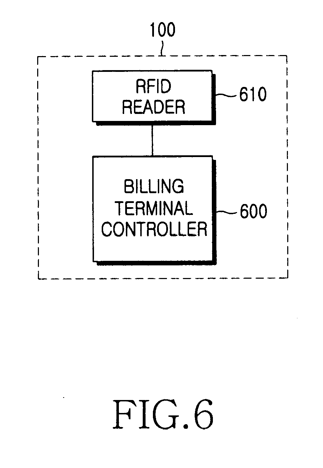

The billing terminal 110 is configured as shown in FIG. 6. The RFID reader 610 of the billing terminal 110 generates an RF signal to read the tag ID or the user related information from the RFID tag 330 and receives and transmits the tag ID or the user related information output from the RFID tag 330 to a billing terminal controller 600. When the mobile pay phone 110 contacts the billing terminal 110, the billing terminal controller 600 transmits a serial number of the mobile phone number 110, user related information and station information to the billing server 190 using information provided from the RFID tag 330 to bill a public transport fare.

When using an RFID technique between the mobile pay phone 110 and the billing terminal 100, the RFID tag 330 should be paired with the RFID reader 610 so that information of the RFID tag 330 can be recognized using the paired RFID reader. The RFID tag 330 includes various user related information of the mobile pay phone 110.

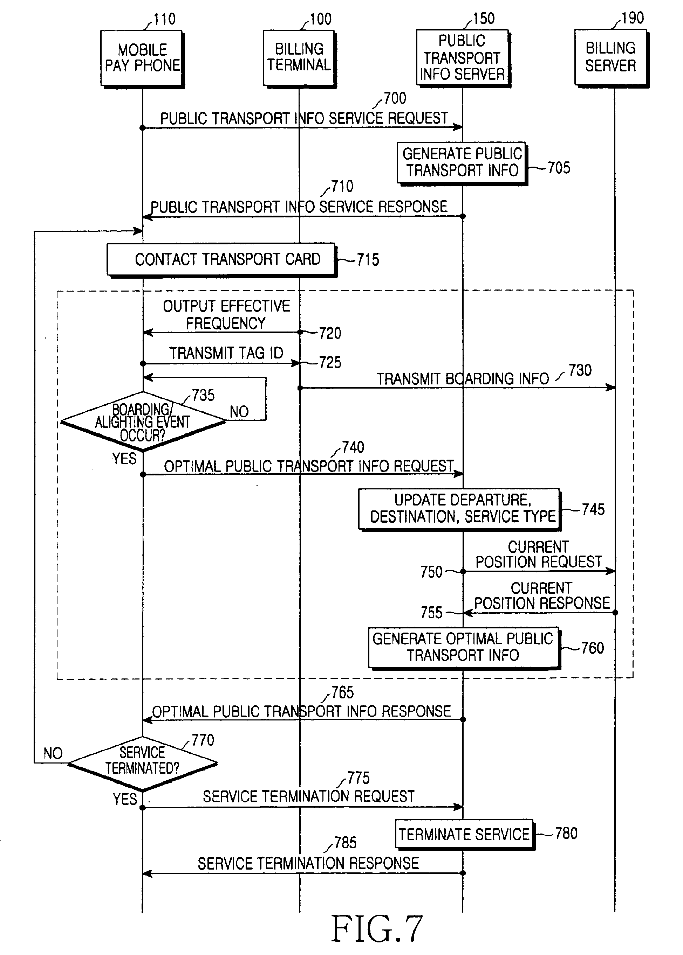

FIG. 7 illustrates signal flows between components of a system for providing public transport information according to an embodiment of the present invention.

In step 700, upon receiving a request for public transport information service from a user, the mobile pay phone 110 accesses the public transport information server 150 to inform the public transport information server 150 of the receipt of the request using the SMS or the data service. Once the mobile pay phone 110 accesses the public transport information server 150, the user can input a start position, a destination and a desired information service type.

In step 705, the public transport information server 150 generates public transport information that is optimal for the user to get to the destination based on current traffic conditions. In other words, the public transport information server 150 provides initial public transport transfer information en route to the destination at the request for public transport information service from the mobile pay phone 110. When the optimal public transport information is generated in this manner, the public transport information server 150 transmits a response message to the request to the mobile pay phone 110.

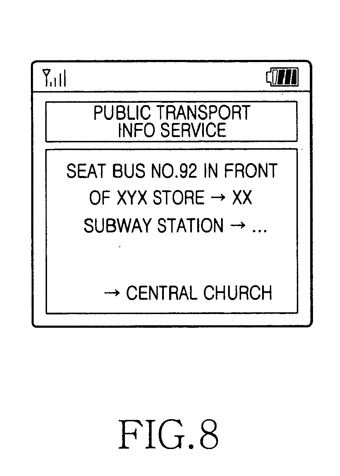

The initial optimal public transport information provided to the mobile pay phone 110 is as shown in FIG. 8. Referring to FIG. 8, when the user inputs the departure position and the destination, information about which station the user needs to board/alight and information about a public transport mode that is available at a corresponding station at the time of boarding/alighting can be provided to the user. At this time, the mobile pay phone 110 may receive the response using a transmission protocol that is arranged with the public transport information server 150 or using the SMS. To this end, the mobile pay phone 110 may include a transmission/reception module for short message reception and a data service.

The user starts to move to the destination by referring to the initial optimal public transport information. When boarding an initially recommended public transport mode, the user brings the mobile pay phone 110 into contact with the billing terminal 100 to pay for a public transport fare in step 715. Signal flows between components of the system when the user brings the mobile pay phone 110 into contact with the billing terminal 100 in step 715 are as follows.

The RFID reader 610 of the billing terminal 100 outputs an effective frequency for receiving information from the RFID tag 330 of the mobile pay phone 110 to the mobile pay phone 110 in the form of a signal. The RFID tag 330 of the mobile pay phone 110 then senses the effective frequency and transmits its tag ID to the billing terminal 100. At this time, the mobile pay phone 110 may transmit user related information in addition to the tag ID. The billing terminal 110 then bills a public transport fare based on a serial number of the mobile phone number 110 and current station information using information provided from the mobile pay mobile 110. The billing terminal 110 transmits boarding information with respect to the mobile pay phone 110, which is acquired through billing, to the billing server 190.

When the brings the mobile pay phone 110 into contact with the billing terminal 100, the mobile pay phone 110 can determine whether a boarding/alighting event of the user occurs in step 735. Thus, when the user alights a current public transport mode to transfer, the mobile pay phone 110 informs the public transport information server 150 of the occurrence of an alighting event. Upon the occurrence of a boarding/alighting event, the mobile pay phone 110 transmits a request for information about an optimal public transport mode to which the user currently can transfer to the public transport information server 150 in step 740. The public transport information server 150 then updates and stores a departure position, a destination, and a desired transport mode type each time the user transfers in step 745. The public transport information server 150 transmits a request for current position information, e.g., station information, to the billing server 190 based on a serial number of the mobile pay phone 110 in step 750. Since the billing server 190 manages a user's boarding/alighting position provided from the billing terminal 100, it can recognize a current position of the mobile pay phone 110 and transmits a current position response message to the public transport information server 150 in step 755.

The public transport information server 150 then generates optimal public transport information based on a current position of the mobile pay phone 110 provided from the billing server 190 and information stored in the public transport station information DB 170 and the sectional real-time traffic information DB 180, in step 760. More specifically, since the public transport information server 150 manages a user's boarding/alighting position, the time required for each section between stations, transfer information, and traffic condition information, it generates useful public transport information such as shortest time information, lowest fare information, and shortest distance information using the current position of the mobile pay phone 110 and the destination that is initially input by the user and provides the generated public transport information to the mobile pay phone 110 in step 765. To facilitate convenience, at least one public transport information message is provided to the mobile pay phone 110. For example, when the user gives a high priority to the shortest travel time, a method for reaching the destination within the shortest time is provided to the user. When the user gives a high priority to the lowest fare, a method for reaching the destination with the lowest fare is provided to the user

Unless the user requests service termination in step 770, the mobile pay phone 110 goes back to step 715 to provide optimal public transport information according to the use of another public transport mode. In other words, whenever a boarding/alighting event occurs through the mobile pay phone 110, the foregoing process is repeated to allow the user to get to the destination using public transport. When the user arrives at the destination, the mobile pay phone 110 transmits a request for service termination from the public transport information server 150 in step 775. The public transport information server 150 then terminates the public transport information service in step 780 and transmits a service termination response message indicating service termination to the mobile pay phone 110 in step 785. Thus, the mobile pay phone 110 informs the user of service termination by outputting the received service termination response message in the form of voice or a display.

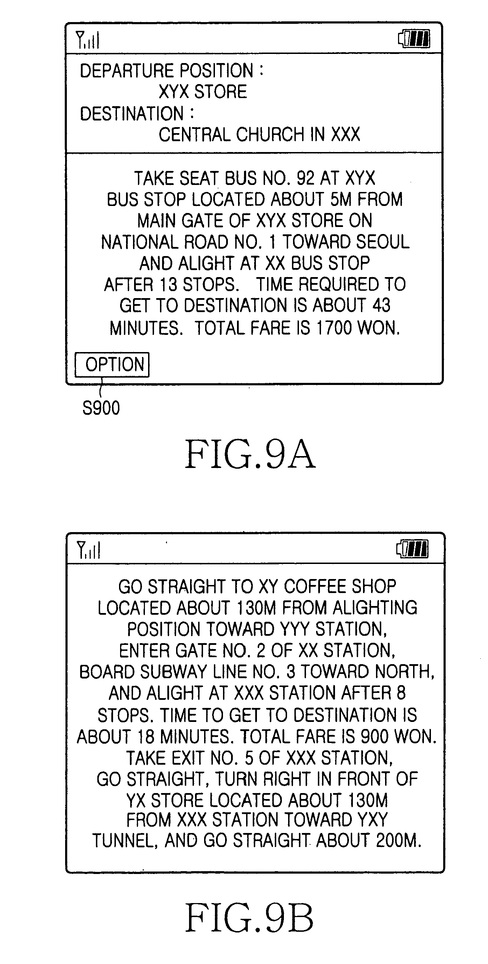

The public transport information may be output on a screen as shown in FIGs. 9A and 9B or through a speaker. Information provided to the user includes information about a distance the user needs to move using an initial available public transport mode having a corresponding line number, information about the time required to get to the destination when using the public transport mode having the corresponding line number and information about a fare for the use of the public transport mode, as shown in FIG. 9A. When the user selects an option menu S900 shown in FIG. 9A, the user can receive more detailed public transport information as shown in FIG. 9B when the user transfers. Altematively, when the user selects the option menu S900, the user can receive information about additional public transport information that is available to get to the destination.

When the user transfers en route to the destination, information such as a public transport mode the user needs to board in a user's current position, a line number of the public transport mode, a transfer position and the time required to move from the user's current position to an alighting position, is provided to the user. In particular, in the present invention, when public transport information is provided, sectional real-time traffic condition information is referred to, thereby providing optimal public transport information to the user.

As described above, according to the present invention, when a user having a mobile pay phone desires to reach an unfamiliar destination using public transport, various public transport information such as shortest time information, lowest fare information and shortest distance information is provided to the user using station information that can be acquired when the user brings the mobile pay phone into contact with a billing terminal installed in a bus or a subway station and using route information provided from a public transport information server. Thus, user's convenience in the use of public transport can be improved. In particular, according to the present invention, the user can be automatically provided with optimal public transport information when paying for a public transport fare using the mobile pay phone without separately inputting his/her current position or directly searching for desired information whenever transferring. Therefore, the user can accurately and easily acquire desired transport information. Moreover, according to the present invention, public transport information is requested using a data service or an SMS, thereby reducing a fare for the use of a communication network.

While the invention has been shown and described with reference to certain preferred embodiments thereof, it will be understood by those skilled in the art that various changes in form and details may be made therein without departing from the scope of the invention.

## Claims

1. A system for providing public transport information, the system comprising:
a public transport information server for providing initial public transport transfer information required by a user who is en route to a destination at a request for a public transport information service from the user and providing optimal public transport information based on current traffic condition information and transfer position information when the user transfers;
a billing terminal for billing a public transport fare and transmitting user boarding/alighting information when the user boards or alights;
a billing server for providing the transfer position information to the public transport information server using the user boarding/alighting information transmitted from the billing terminal; and
a mobile communication terminal for contacting the billing terminal to pay for the public transport fare and outputting the optimal public transport information provided from the public transport information server when the user transfers.

2. The system of claim 1, wherein the optimal public transport information is output on a screen or as a voice through a speaker.

3. The system of claim 1 or 2, wherein the billing server recognizes information about a current position of the user through the user boarding/alighting information and provides the transfer position information.

4. The system of claim 3, wherein the user boarding/alighting information includes at least one of a boarding/alighting position of the user, a distance the user boards and a transfer record of the user.

5. The system of one of claims 1 to 4, wherein the mobile communication terminal comprises:
a key input unit for inputting information for the request;
an RF transceiver for communicating with the public transport information server upon completion of the input of the information to receive the optimal public transport information;
a display unit for displaying the optimal public transport information received from the public transport information server; and
a radio frequency identification, RFID, tag for transmitting a tag ID to the billing terminal when the user boards or alights.

6. The system of claim 5, wherein when the user transmits a request for the public transport information service, the mobile communication terminal receives a departure position, a destination and a desired information service type from the user through the key input unit and transmits information received from the user to the public transport information server through the RF transceiver.

7. The system of claim 5 or 6, wherein the RFID tag comprises:
a tag memory for storing the tag ID and user related information;
an antenna for sensing whether there is an effective frequency within a distance; and
a controller for controlling the tag memory to transmit information stored in the tag memory to the billing terminal when the effective frequency is sensed.

8. The system of claim 7, wherein the billing terminal comprises:
an RFID reader for generating an RF signal to read the tag ID or the user related information from the RFID tag of the mobile communication terminal; and
a billing terminal controller for transmitting the user boarding/alighting information to the billing server using the information provided from the RFID reader to bill the public transport fare.

9. The system of claim 8, wherein the user boarding/alighting information includes a number of the mobile communication terminal, the user related information and boarding/alighting station information.

10. The system of one of claims 1 to 9, wherein the public transport information server includes a database for managing at least one of a user's boarding/alighting position en route to the destination, a time required for sections between stations, transfer information and traffic condition information.

11. The system of claim 10, wherein the database comprises:
a public transport station information database for storing a station type, a station ID, a line number, a station position, a preceding section time, a following section time and neighboring transfer information for the stations; and
a sectional real-time traffic information database for storing various traffic condition information that affects traffic conditions including current traffic volume information, accident information, construction information and event information, so as to provide the optimal public transport information to the user based on traffic conditions that change in real time.

12. The system of claim 10 or 11, wherein the database classifies public transport modes that are available for the user and stores at least one line number corresponding to at least one line passing through stations of the public transport modes, information about stations through which the at least one line corresponding to the at least one line number passes, station names, expected time required to move from a station to another station, intervals of the at least one line of the public transport modes and various transfer information required for the user to transfer en route to the destination.

13. The system of one of claims 10 to 12, further comprising a public transport route information generator for generating optimal public transport route information using the user's current position and the destination that is initially input by the user, provided from the billing server.

14. The system of claim 13, wherein the optimal public transport route information includes at least one of shortest time information, lowest fare information and shortest distance information required to reach the destination.

15. A method for providing public transport information, the method comprising the steps of:
providing, through use of a public transport information server, initial public transport transfer information required on the way to a destination at a request for a public transport information service from a mobile communication terminal;
determining, with the mobile communication terminal, whether a boarding/alighting event occurs in a public transport mode corresponding to the initial public transport transfer information;
requesting optimal public transport transfer information in a user's current position from the public transport information server when the boarding/alighting event occurs; and
receiving and outputting the optimal public transport transfer information.

16. The method of claim 15, wherein the step of determining whether the boarding/alighting event occurs comprises the step of determining whether the mobile communication terminal contacts a billing terminal for billing a public transport fare.

17. The method of claim 15 or 16, wherein the step of providing the initial public transport transfer information comprises the steps of:
transmitting the initial public transport transfer information to the public transport information server using a short message service or a data service when the user inputs a departure position and the destination;
generating the optimal initial public transport transfer information to reach the destination based on current traffic conditions;
transmitting the optimal initial public transport transfer information to the mobile communication terminal that requests the public transport information service.

18. The method of claim 16, further comprising the steps of:
receiving, through the billing terminal, a tag ID or user related information from the mobile communication terminal when the mobile communication terminal contacts the billing terminal; and
transmitting boarding information to a billing server using the received tag ID or the user related information.

19. The method of one of claims 15 to 18, further comprising the steps of:
updating and storing, through the public transport information server, a departure position and a destination when optimal public transport information is requested in a current position of the user;
transmitting a request for the current position of the mobile communication terminal to the billing server after storing the departure position and the destination; and
generating optimal public transport information based on current traffic conditions when a current position of the mobile communication terminal is provided.
